Europäisches Patentamt

European Patent Office

Office européen des brevets

(19)

(11) Publication number:     0 300 050
A1

(12) **EUROPEAN PATENT APPLICATION**

published in accordance with Art. 158(3) EPC

(21) Application number: 88901302.5

(22) Date of filing: 29.01.88

Data of the international application taken as a basis:

(86) International application number:
PCT/JP88/00071

(87) International publication number:
WO88/05715 (11.08.88 88/18)

(51) Int. Cl.³: **B 25 J 17/02**

(30) Priority: 03.02.87 JP 13750/87 U

(43) Date of publication of application:
25.01.89 Bulletin 89/4

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: TOYODA, Kenichi
1-17-25, Shinmei Hino-shi
Tokyo 191(JP)

(72) Inventor: TORII, Nobutoshi
Fuyo Haitsu 308 65-4, Takakura-cho
Hachioji-shi Tokyo 192(JP)

(72) Inventor: MIZUNO, Hitoshi
Fanuc Hino Shataku 307 3-27, Tamadaira
Hino-shi Tokyo 191(JP)

(74) Representative: Mock, Hans et al,
MARKS & CLERK Suite 301 Sunlight House Quay Street
Manchester M3 3JY(GB)

(54) STRUCTURE FOR SUPPORTING BEARING IN WRIST OF INDUSTRIAL ROBOT.

(57) A structure for supporting a bearing in a wrist of an industrial robot, in which the bearing (19) is unitarily insert-molded in the inner surface of an outer support member (10) with the inner projecting end portion of the bearing (19) held between an outer projecting portion (12') of a shaft (12) and a support member (15), the outer support member (10) being fixed to a support base (11). This bearing support structure is used for an industrial robot.

EP 0 300 050 A1

./...

Fig. 1

## DESCRIPTION

TITLE OF THE INVENTION

Structure of Supporting Bearing of Wrist Portion of Industrial Robot

TECHNICAL FIELD

The present invention relates to a structure for supporting a bearing of a wrist portion of a robot, which is utilized for an industrial robot.

BACKGROUND ART

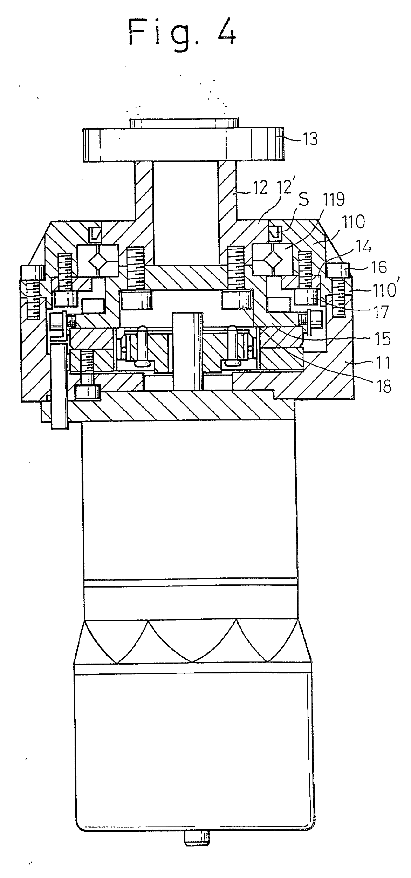

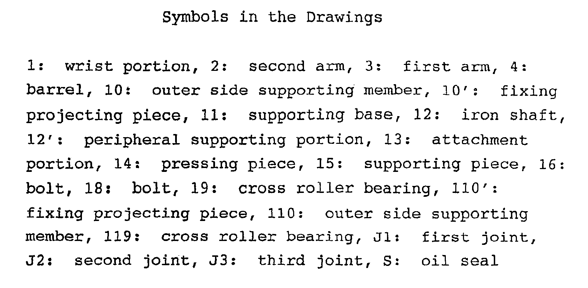

In a conventional bearing-supporting structure, as shown, for example, in Fig. 4, the inner ring side of a split cross roller bearing 119 of an outer ring is gripped between a supporting portion 12' of an iron shaft 12 and a supporting piece 15 of a metal, the supporting portion 12' and supporting piece 15 are secured by a bolt 18, the supporting piece 15 is fixed to a turning receiving member, and the outer ring side is gripped between an outer side supporting member 110 formed of cast aluminum and a pressing piece 14 of iron, and secured by a bolt 17. Furthermore, a supporting projecting piece 110' of the outer side supporting member 110 is secured to a supporting base 11 by a bolt 16 and a housing is constructed by the outer side supporting member 110 and supporting base 11.

The bearing-supporting structure shown in Fig. 4 is suitable for a wrist portion of a robot, but the number of small parts is large, and therefore, the number of steps for assembling, maintenance, and control is increased.

DISCLOSURE OF THE INVENTION

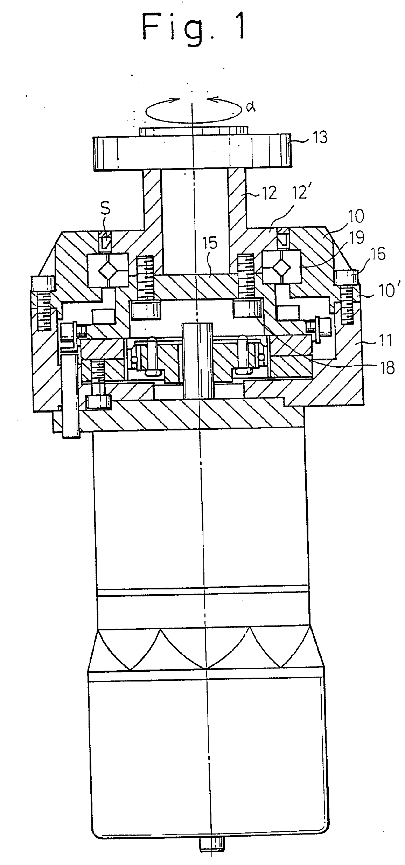

The problem of the conventional structure has been solved or moderated by embedding the fixing side, that is, the outer ring side, of the bearing in an outer supporting member formed of a plastic material by insert molding, and fixing a fixing projecting piece 10' of the outer side supporting member 10 to a supporting base 11 by a bolt 16, as shown in Fig. 1.

Namely, the bearing can be handled as a unit part integrated with the outer side supporting member and the number of parts can be decreased, and therefore, the assembling, maintenance and control of the wrist portion can be performed simply and easily.

Since the cross roller bearing is integrated in the outer side supporting member 10 by insert molding, parts for supporting the outer side of the cross roller can be omitted, and with the decrease of the number of parts, the number of assembling steps can be decreased and a reduction of the cost can be realized.

Moreover, since the outer side supporting member 10 is formed of a plastic material which is lighter than the cast aluminum customarily used, a reduction of the weight of the wrist of the robot can be achieved.

BRIEF DESCRIPTION OF THE DRAWINGS

Figure 1 is a sectional schematic view illustrating the bearing-supporting structure of the present invention;

Fig. 2 is a schematic side view showing the whole of a robot to which the present invention is applied, and Fig. 3 is a schematic front view of this robot;

Fig. 4 is a sectional schematic view illustrating a conventional bearing-supporting structure.

BEST MODE FOR CARRYING OUT THE INVENTION

Figure 1 is a sectional schematic view of a bearing-supporting structure to which the present invention is applied, and as apparent from Fig. 1, an inner ring split cross roller bearing 19 formed of steel is attached to a mold and a thermoplastic resin is cast in the mold, and the outer ring side of the cross roller bearing 19 is integrally embedded in the inner circumferential face to form an outer side supporting member 10 having a fixing projecting piece 10' on the outer side.

0300050

Then, the inner ring side of the cross roller bearing 19 is gripped between a peripheral supporting portion 12' of an iron shaft 12 and a supporting piece 15 formed of cast aluminum and the iron shaft 12 and supporting piece 15 are clamped by a bolt 18, and simultaneously, the supporting piece 15 is connected to a driving portion. Then, the fixing projecting piece 10' of the outer side supporting member 10 is clamped to a supporting base 11 by a bolt 16 to assemble a wrist portion. Note, S represents an oil seal.

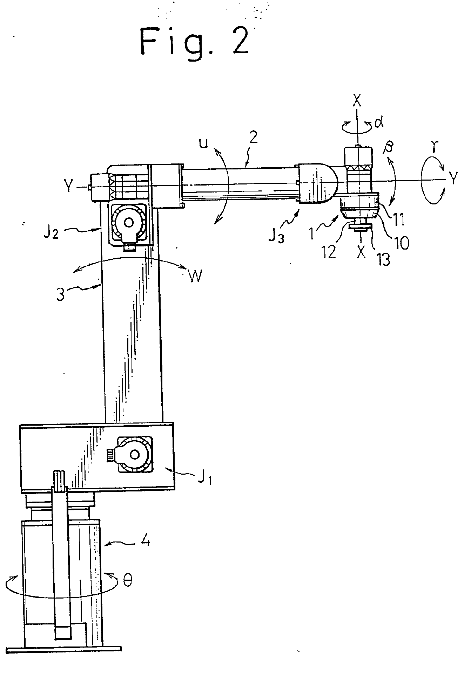

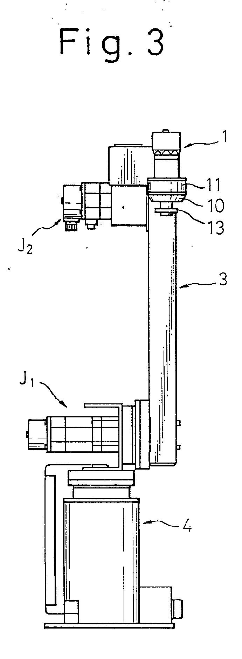

Figures 2 and 3 are schematic diagrams illustrating the whole of a robot in which the present invention is carried out. In this robot, a first arm 3 performing W revolutions in the longitudinal direction is connected to the upper portion of a barrel 4 performing $\theta$ revolutions through a first joint J1, and a second arm 2 performing U revolutions in the vertical direction is disposed on the upper end of the first arm 3 through a second joint J2. A wrist portion 1 performing $\gamma$ revolutions, $\beta$ revolutions and $\alpha$ revolutions is disposed on the top end of the second arm 2 through a wrist joint J3. An attachment portion 13 for clamping various operating pieces is clamped to a wrist shaft 12.

In the bearing-supporting structure of the present invention, since the bearing is integrated with the outer side supporting member 10, parts shown in Fig. 4, such as a pressing piece 14 of iron for gripping the outer ring side of the bearing and a bolt 17 for clamping the pressing piece of iron to an outer side supporting member 110, can be omitted. Accordingly, the wrist portion can be easily assembled and the number of parts can be decreased. Moreover, since the outer side supporting member 10 is a molded plastic article, a reduction of the weight of the wrist portion can be realized.

When dismantling of the wrist portion is necessary, the integrated cross roller and outer side supporting member can be dismounted by removing the bolt 16 and then taking out the bolt 18.

## CLAIMS

1. A structure for supporting a bearing of a wrist portion, wherein a bearing 19 is integrated in an inner side face of an outer side supporting member 10 by insert molding, an inner side projecting end portion of the bearing 19 is gripped and fixed between an outer side projecting portion 12' of a shaft 12 and a supporting piece 15, and the outer side supporting member 10 is fixed to a supporting base 11.

2. A structure for supporting a bearing as set forth in claim 1, wherein the outer supporting member 10 is molded of a plastic material.

# Fig. 1

# Fig. 2

# Fig. 3

# Fig. 4

0300050

## Symbols in the Drawings

1: wrist portion, 2: second arm, 3: first arm, 4: barrel, 10: outer side supporting member, 10': fixing projecting piece, 11: supporting base, 12: iron shaft, 12': peripheral supporting portion, 13: attachment portion, 14: pressing piece, 15: supporting piece, 16: bolt, 18: bolt, 19: cross roller bearing, 110': fixing projecting piece, 110: outer side supporting member, 119: cross roller bearing, J1: first joint, J2: second joint, J3: third joint, S: oil seal

0300050

# INTERNATIONAL SEARCH REPORT

International Application No  PCT/JP88/00071

**I. CLASSIFICATION OF SUBJECT MATTER** (if several classification symbols apply, indicate all) 3

According to International Patent Classification (IPC) or to both National Classification and IPC

Int.Cl4
B25J17/02

**II. FIELDS SEARCHED**

| Minimum Documentation Searched 4 | |
|---|---|
| Classification System | Classification Symbols |
| IPC | B25J17/02 |

| Documentation Searched other than Minimum Documentation to the Extent that such Documents are Included in the Fields Searched 5 | |
|---|---|
| Jitsuyo Shinan Koho | 1926 – 1988 |
| Kokai Jitsuyo Shinan Koho | 1971 – 1988 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| Y | JP, U, 61-159191 (Komatsu Ltd.)<br>2. October. 1986 (02. 10. 86) | 1-2 |
| Y | JP, U, 54-140153 (Nippon Seiko Kabushiki Kaisha)<br>28. September. 1979 (28. 09. 79)<br>(Family: none) | 1-2 |

\* Special categories of cited documents: 16

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents. such combination being obvious to a person skilled in the art

"&" document member of the same patent family

**IV. CERTIFICATION**

| Date of the Actual Completion of the International Search 2 | Date of Mailing of this International Search Report 2 |
|---|---|
| April 7, 1988 (07. 04. 88) | April 25, 1988 (25. 04. 88) |
| International Searching Authority 1 | Signature of Authorized Officer 20 |
| Japanese Patent Office | |

0300050

# INTERNATIONAL SEARCH REPORT

International Application No   PCT/JP88/00071

**I. CLASSIFICATION OF SUBJECT MATTER** (if several classification symbols apply, indicate all) 3

According to International Patent Classification (IPC) or to both National Classification and IPC

Int.Cl4
B25J17/02

**II. FIELDS SEARCHED**

| Minimum Documentation Searched 4 | |
|---|---|
| Classification System | Classification Symbols |
| IPC | B25J17/02 |

Documentation Searched other than Minimum Documentation
to the Extent that such Documents are Included in the Fields Searched 6

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| Y | JP, U, 61-159191 (Komatsu Ltd.) 2. October. 1986 (02. 10. 86) | 1-2 |
| Y | JP, U, 54-140153 (Nippon Seiko Kabushiki Kaisha) 28. September. 1979 (28. 09. 79) (Family: none) | 1-2 |

* Special categories of cited documents: 15

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search 2 | Date of Mailing of this International Search Report 2 |
|---|---|
| April 7, 1988 (07. 04. 88) | April 25, 1988 (25. 04. 88) |
| International Searching Authority 1 | Signature of Authorized Officer 20 |
| Japanese Patent Office | |

Form PCT/ISA/210 (second sheet) (October 1977)

# INTERNATIONAL SEARCH REPORT

International Application No PCT/JP88/00071

## I. CLASSIFICATION OF SUBJECT MATTER (if several classification symbols apply, indicate all) 3

According to International Patent Classification (IPC) or to both National Classification and IPC

Int.Cl4
B25J17/02

## II. FIELDS SEARCHED

Minimum Documentation Searched 4

| Classification System | Classification Symbols |
|---|---|
| IPC | B25J17/02 |

Documentation Searched other than Minimum Documentation
to the Extent that such Documents are Included in the Fields Searched 5

| | |
|---|---|
| Jitsuyo Shinan Koho | 1926 - 1988 |
| Kokai Jitsuyo Shinan Koho | 1971 - 1988 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, U, 61-159191 (Komatsu Ltd.)<br>2. October. 1986 (02. 10. 86) | 1-2 |
| Y | JP, U, 54-140153 (Nippon Seiko Kabushiki Kaisha)<br>28. September. 1979 (28. 09. 79)<br>(Family: none) | 1-2 |

* Special categories of cited documents: 15

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| April 7, 1988 (07. 04. 88) | April 25, 1988 (25. 04. 88) |
| International Searching Authority 1 | Signature of Authorized Officer 20 |
| Japanese Patent Office | |

Form PCT/ISA/210 (second sheet) (October 1977)